# EUROPÄISCHE PATENTSCHRIFT

(11) **EP 1 993 787 B1**
(45) Veröffentlichungstag und Bekanntmachung des Hinweises auf die Patenterteilung: **05.05.2010**
(21) Anmeldenummer: 07701907.3
(22) Anmeldetag: 02.03.2007
(51) Int. Cl.: B25B 23/00, B23B 31/107

(54) **SCHNELLWECHSELHALTER FÜR SCHRAUBENDREHEREINSÄTZE**
QUICK-CHANGE HOLDER FOR SCREWDRIVER INSERTS
PORTE-OUTIL À SERRAGE RAPIDE DESTINÉ À DES INSERTS DE TOURNEVIS

(30) Priorität: 02.03.2006 CH 332062006
(43) Veröffentlichungstag der Anmeldung: 26.11.2008
(73) Patentinhaber: BD-Werkzeugtechnik AG, 8047 Zürich (CH)
(72) Erfinder: HAUSAMMANN, Daniel, CH-8047 Zürich (CH)
(74) Vertreter: Rentsch & Partner
(86) Internationale Anmeldenummer: PCT/CH2007/000107
(87) Internationale Veröffentlichungsnummer: WO 2007/098633

(56) Entgegenhaltungen:
- WO-A-01/96052
- DE-U1- 20 201 012
- DE-U1- 20 303 079
- DE-U1-202006 006 967
- DE-U1-202006 018 218
- DE-U1-202007 000 115
- US-A1- 2001 043 841
- US-A1- 2004 164 503
- US-A1- 2005 045 001
- US-B1- 6 966 562

## Beschreibung

### FELD DER ERFINDUNG

Die vorliegende Erfindung betrifft einen Schnellwechselhalter für Schraubendrehereinsätze gemäss Oberbegriff des Anspruchs 1, der aus dem Dokument US 2001/043841 A bekannt ist.

### HINTERGRUND DER ERFINDUNG

Aus dem Stand der Technik sind Schraubendrehereinsätze, die auch als SchraubendreherBits oder einfach als Bits bezeichnet werden bekannt. Solche Bits sind bei gewerblichen und privaten Anwendern als auswechselbare Arbeitsspitzen von elektrisch angetriebenen Bohrmaschirlen und Schraubendrehern weit verbreitet In den letzten Jahren haben sich im gewerblichen Bereich, aber auch bei Heimwerkern akkugetriebene Bohrmaschinen und Schraubendreher durchgesetzt, so dass Bohr und Schraubarbeiten mit Hilfe der Schraubendreher-Bits an allen Orten netzunabhängig durchgeführt werden können. Bei Arbeiten auf Gerüsten, Leitern oder an schwer zugänglichen Stellen ist es von besonderer Bedeutung, dass sich die Bits einfach, vorzugsweise mit einer Hand auswechseln lassen und dass ein einziger Schraubendreher, respektive eine einzige Schnellwechselhalterung mit möglichst vielen verschiedenen Typen von Bits verwendet werden kann.

Es ist bekannt und zum Beispiel in der DE-U-202010212 beschrieben, dass die Schraubendrehereinsätze oder Bits drehmomentschlüssig in eine Halterung eingesetzt, werden, die entweder an der Arbeitsspindel des Schraubwerkzeugs oder in einem Halterteil ausgebildet ist, welches in ein Spannfutter des Schraubwerkzeugs eingesetzt wird. Die drehmomentschlüssige Mitnahme-Verbindung zwischen der Halterung und dem Schraubendrehereinsatz wird üblicherweise durch einen Innensechskant der Aufnahme der Halterung und einen entsprechenden Aussensechskant des Schraubendrehereinsatzes bewirkt. Von der Firma Fein sind aber auch Einsätze mit einem Aussenflachkant bekannt, die ebenfalls eine drehmomentschlüssige Mitnahme-Verbindung in einer entsprechenden Aufnahme gewährleisten.

Zum lösbaren Einrasten von Schraubendrehereinsätzen in der Halterung sind insbesondere zwei Sechskant-Mitnahme-Verbindungen gebräuchlich, die gemäß DIN 3126 genormt sind.

In der Form C der DIN 3126 weist der Aussensechskant einen Einstich geringer Tiefe auf, der nur in die Kanten des Aussensechskants eindringt. Der Schraubendrehereinsatz wird in der Aufnahme durch einen in dem Innensechskant der Aufnahme der Halterung gelagerten Sprengring, der bei eingesetztem Schraubendrehereinsatz in den Einstich eingreift gehalten.

In der Form E der DIN 3126 weist der Aussensechskant des Schraubendrehereinsatzes einen tiefen Einstich mit einem großen Profilradius auf. Um den Schraubendrehereinsatz in der Aufnahme der Halterung zu halten, greift eine Rastkugel radial in diesen Einstich ein. Die Rastkugel wird durch eine axial federbelastete Hülse mit Innenkonus in dem Einstich gehalten. Durch Verschieben der Hülse gegen die Federbelastung gibt der Innenkonus die Rastkugel frei, so dass der Schraubendrehereinsatz entnommen werden kann.

In der DE-U-20201021 wurde bereits erkannt, dass aufgrund der unterschiedlichen radialen Tiefe der Einstiche und aufgrund ihrer unterschiedlichen axialen Position an dem Aussensechskant des Schraubendrehereinsatzes viele Halterungen nicht für Schraubendrehereinsätze beider Formen C und E kompatibel sind. Schraubwerkzeuge, bei welchen die Halterung für die Schraubendrehereinsätze an der Arbeitsspindel ausgebildet ist, können daher nur für eine Form der Schraubendrehereinsätze verwendet werden. Ist die Halterung an einem gesonderten Halterteil ausgebildet, so muss bei einem Wechsel der Form der Schraubendrehereinsätze auch das Halterteil ausgetauscht werden.

Die DE-U-20201021 schlägt daher vor, eine Halterung für Schraubendrehereinsätze zu schaffen, die sowohl Schraubendrehereinsätze der Form C als auch Schraubendrehereinsätze der Form E gemäß DIN 3126 aufnehmen kann. Dazu wird im Innensechskant der antriebsseitigen Aufnahme der Halterung ein Rastelement in Form einer Kugel angebracht, welche der axialen Position und der radialen Tiefe des Einstichs des Aussensechskants eines Schraubendrehereinsatzes der Form C gemäß DIN 3126 entsprechend ausgebildet ist. Am inneren Ende des Innensechskants der Aufnahme ist eine weitere Kugel aus Elastomermaterial eingepresst, welche den in die Aufnahme eingesetzten Schraubendrehereinsatz axial federnd abstützt. Wird in die Aufnahme ein Schraubendrehereinsatz der Form C eingesetzt, so wird das elastische Element durch den Schraubendrehereinsatz axial so weit zusammengedrückt, bis das Rastelement in gleicher Weise in den Einstich des Aussensechskants des Schraubendrehereinsatzes eingreift, wie dies bei einer herkömmlichen Halterung für einen solchen Schraubendrehereinsatz der Form C der Fall ist Wird ein Bit der Form E in die Halterung eingesetzt, so greift das Rastelement in den breiteren und tieferen Einstich des Aussensechskantes der Form E ein. Das elastische Element drückt dabei den Bit axial so weit nach vOrn, bis die hintere Umfangskante des Einstichs als Rastkante an dem Rastelement axial unter dem Druck des elastischen Elementes anliegt. Die Rastelemente werden von einer aussenliegenden Feder nach innen gedrückt und sichern damit die zu haltenden Bits. Zum Auswechseln müssen die Bits gegen die Haltekraft der Rastelemente aus der Halterung herausgezogen werden, was einen Einhandbetrieb unmöglich macht Werden die Elastomerelemente so ausgebildet, dass ihre axiale Vorspannung das Entnehmen eines Bits unterstützt, so kann es leicht dazu führen, dass durch den zusätzlichen Druck des Elastomerelements der Bit sehr schnell aus der Aufnahmeöffnung herausspringt und der Nutzer ihn geschickt auffangen muss. Bei weniger geschickten Nutzern verschwinden infolgedessen Schraubendrehereinsätze leicht an unzugänglichen Stellen des Arbeitsplatzes. Auf diese Weise kann beim Suchen und Hervorholen viel Zeit und Arbeitskraft verschwendet werden. Ferner birgt ein hervorspringender Schraubendrehereinsatz aufgrund seiner Härte und seines Gewichtes ein nicht unerhebliches Verletzungsrisiko. Schließlich besteht ein weiterer Nachteil darin, dass die Elastomerelemente nur eine begrenzte Lebensdauer haben.

Diese Nachteile sind auch von anderen Bithaltern bekannt, bei denen zwischen dem geschlossenen Ende eines Hülsenkörpers und dem aufgenommenen Bit eine Feder angeordnet ist, die durch Einführen des Schraubendrehereinsatzes in die Öffnung unter Spannung gesetzt wird. Durch den Druck, den eine äußere Spannhülse auf Arretierkugeln ausübt, wird der Schraubendrehereinsatz in Position gehalten. Beim Auswechseln des Werkzeugeinsatzes gelben die Arretierkugeln den Bit frei und die Kraft der vorgespannten Feder drückt den Bit automatisch aus der Öffnung heraus.

Im deutschen Gebrauchsmuster DE 20303079 wurde das Problem des unkontrollierten Herausspringens der Bits erkannt und es wurde auch erkannt, dass ein hervorspringender Schraubendrehereinsatz aufgrund seiner Härte und seines Gewichtes ein nicht unerhebliches Verletzungsrisiko auf Baustellen darstellt. Es wird daher in der DE 20303079 ein Spannfutter für Werkzeugeinsätze, insbesondere ein Spannfutter für Schraubendrehereinsätze vorgeschlagen, bei dem im Hülsenkörper zwei Permanentmagneten angeordnet sind. Die gleichsinnigen Pole stehen sich dabei gegenüber, so dass sich die beiden Permanentmagneten abstoßen. Der Ersatz der Federn durch die sich abstossenden Magnete soll die Gefahr verringern, dass die Bits beim Herausnehmen zu schnell aus dem Spannfutter hervorspringen. Beim Auswerfen wird der Schraubendrehereinsatz durch Verschieben der äußeren Spannhülse und des Arretierelements freigegeben und automatisch durch die Abstoßung der beiden Permanentmagneten in Richtung der Aufnahmeöffnung vorgeschoben. Da die axiale Bewegung des am Bit anliegenden vorderen verschiebbeweglich in der Halterung gelagerten Magneten durch einen Anschlag im Bereich der Aufnahmeöffnung begrenzt ist und da dieser durch seine Anziehungskraft den Bit hält, kann der Bit nicht aus der Aufnahmeöffnung herausspringen. In der Vorrichtung gemäss der DE 20303079 können die Bits wiederum nicht im Einhandbetrieb gewechselt werden, da beim Einstecken eines Bits das Arretierelement durch manuelles Zurückziehen der äusseren Hülse freigegeben werden muss.

Die US 2001/0043841 zeigt einen Bithalter mit einem Haltemechanismus zum Festhalten eines Bits und ein Auswurfmittel zum Erleichtern des Bit-Austauschs, wobei das Auswurfmittel einen Shuttle aufweist, welcher von einer Druckfeder beaufschlagt ist und bei Freigabe einer Kugelverriegelung den Bit teilweise aus dem Haltemechanismus schiebt Der Haltemechanismus umfasst ein kugelförmiges Rastelement, welches durch einen elastischen O-Ring in die umlaufende Rille des eingesetzten Typ E Bits gedrückt wird. Ein wesentlicher Nachteil des in der US 2001/0043841 vorgeschlagenen Bithalters ist, dass dieser durch die Kraftbeaufschlagung des Auswurfsmittels und des Haltemechanismus, vor allem bei häufigem Bitwechsel leicht zum Verklemmen neigt. Weiters ist der Haltemechanismus so ausgeführt, dass bevorzugt nur Bits vom Typ E gehalten werden können.

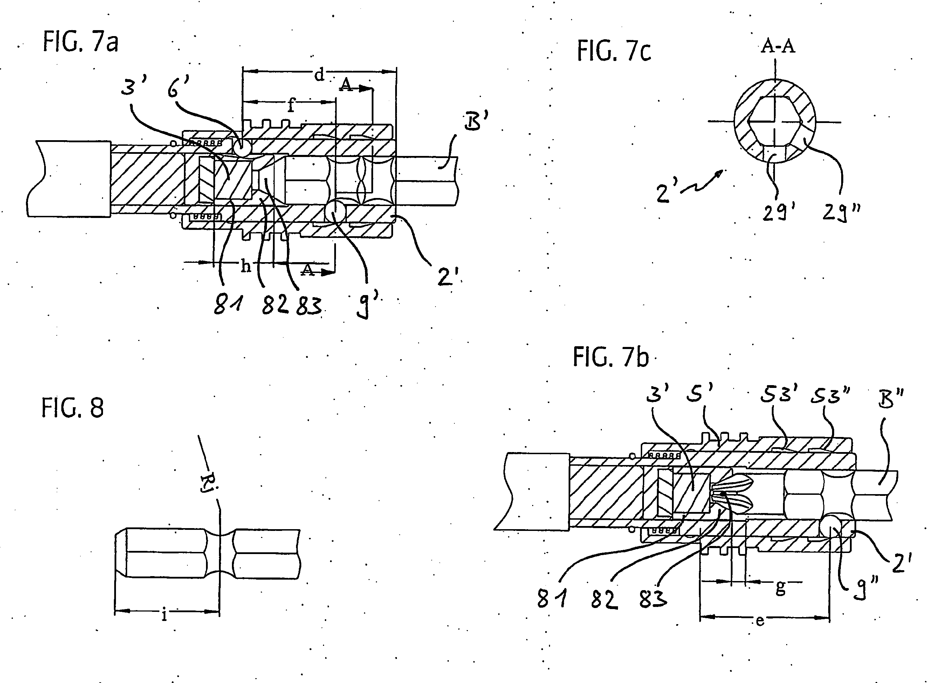

Es ist daher die Aufgabe der vorliegenden Erfindung eine neue Schnellwechselhalterung für Schraubendrehereinsätze zur Verfügung zu stellen, die die oben genannten Nachteile nicht aufweist. Die Schraubendrehereinsätze sollen schnell und sicher mit einer Hand eingesetzt und entnommen werden können, ohne dass die Gefahr besteht, dass sie herunterfallen. Zudem sollen Einsätze verschiedener Grössen und Bauart mit der Vorrichtung gemäss der vorliegenden Erfindung eingesetzt werden können. Die technische Lehre der Erfindung erlaubt es dem Fachmann, einen Schnellwechselhalter zu gestalten in dem zwei oder mehr Typen von Bits aus der folgenden Gruppe gehalten werden können: Form C und E gemäß DIN 3126, Bits gemäss der japanischen Norm oder so genannte Japanbits wie sie von der Firma Vessel CO, Inc. Osaka, Japan angeboten werden (gemäss Figur 8), Bits mit einfacher oder mit doppelter Arbeitsspitze.

Diese Aufgabe wird erfindungsgemäß gelöst durch eine Schnellwechselhalterung mit den Merkmalen des Anspruchs 1.

Vorteilhafte Ausführungsformen und Weiterbildungen der vorliegenden Erfindung sind in den abhängigen Ansprüchen beansprucht

Ein wesentlicher Gedanke der Erfindung besteht darin, in der Bitaufnahme Mittel zur Arretierung des ersten öffnungsseitig angebrachten Magneten in einer hinteren Halteposition vorzusehen, die es erlauben den Bit mit einer Hand einzustecken, ohne dass eine gleichzeitige manuelle Betätigung einer äusseren Hülse nötig ist. Die Arretierung des Magneten in der Halteposition bringt wesentliche Vorteile. Zum einen wird dadurch das Rastelement für den Bit stark entlastet, da die Axialkraft des Auswurfmechanismus nicht mehr auf dem Bit bzw. dem Rastelement lastet und der Bit auch noch vom Magneten gehalten ist Zum anderen lassen sich Bits verschiedener Normen einsetzen, da bei einer gewählten axialen Position des Rastelements die verschiebbewegliche Lagerung des ersten Magneten das Einsetzen von Schraubendreherbits verschiedener Formen und Normen ermöglicht und diese jeweils magnetkraftbeaufschlagt in axialer Richtung abstützt. Dadurch lassen sich Bits verschiedener Formen in der erfindungsgemässen Schnellwechselhalterung ohne störendes axiales Spiel sicher halten.

### KURZBESCHREIBUNG DER FIGUREN

Im Folgenden wird anhand der in den Figuren dargestellten Beispiele die Erfindung näher beschrieben. Dabei zeigen rein schematisch die
- Fig. 1: im Querschnitt eine Schnellwechselhalterung gemäss einer ersten Ausgestaltungsform, die auf einem nur teilweise dargestellten Elektrowerkzeug montiert ist;
- Fig. 2a: eine perspektivische Ansicht einer Bitaufnahme von seitlich vorne auf die Aufnahmeöffnung;
- Fig. 2b: eine Seitenansicht auf die Bitaufnahme gemäss Figur 2a;
- Fig. 2c: einen Längsschnitt entlang A-A durch die Bitaufnahme gemäss Figur 2b;
- Fig. 2d: einen Querschnitt entlang B-B durch die Bitaufnahme gemäss Figur 2b;
- Fig. 2e: einen Querschnitt entlang C-C durch die Bitaufnahme gemäss Figur 2b;
- Fig. 2f: eine Ansicht von oben auf die Bitaufnahme gemäss Figur 2a;
- Fig. 3a: eine perspektivische Ansicht einer Auswerferhülse von seitlich vorne;
- Fig. 3b: eine Seitenansicht auf die Auswerferhülse gemäss Figur 3a;
- Fig. 3c: einen Längsschnitt entlang A-A durch die Auswerferhülse gemäss Figur 3b;
- Fig. 4a: eine perspektivische Ansicht eines gefassten Auswerfermagnets von seitlich vorne;
- Fig. 4b: eine Seitenansicht auf den Auswerfermagnet gemäss Figur 4a mit Arretiernut;
- Fig. 4c: einen Längsschnitt entlang A-A durch den Auswerfermagnet gemäss Figur 4b;
- Fig. 4d: eine Sicht von vorne auf den Auswerfermagnet gemäss Figur 4a; .
- Fig. 5a: eine Seitenansicht auf eine weitere Ausführungsform einer Schnellwechselhalterung gemäss der vorliegenden Erfindung mit eingestecktem Bit, wobei die Mittel zur Befestigung in einem Spannfutter nicht dargestellt sind;
- Fig. 5b: einen Längsschnitt entlang A-A durch die Schnellwechselhalterung gemäss Figur 5a;
- Fig. 5c: einen teilweisen Querschnitt entlang C-C durch die Schnellwechselhalterung gemäss Figur 5b;
- Fig. 6a: eine Seitenansicht auf eine Schnellwechselhalterung gemäss Figur 5a, ohne Bit, wobei die Mittel zur Befestigung in einem Spannfutter nicht dargestellt sind;
- Fig. 6b: einen Längsschnitt entlang D-D durch die Schnellwechselhalterung gemäss Figur 6a;
- Fig. 7a: einen Längsschnitt durch eine Schnellwechselhalterung gemäss einer weiteren Ausftihrüngsform der Erfindung;
- Fig. 7b: einen Längsschnitt durch die um 60° gedrehte Schnellwechselhalterung gemäss Figur 7a;
- Fig. 7c: einen Schnitt entlang A-A durch die Bitaufnahme der Schnellwechselhalterung gemäss Figur 7a;
- Fig. 8: ein Detail eines bekannten, so genannten Japanbits der Firma Vessel;
- Fig. 9a: eine Seitenansicht auf eine weitere Ausführungsform einer Schnellwechselhalterung gemäss der vorliegenden Erfindung mit eingestecktem Bit und einem Halterteil, welches in ein Spannfutter des Schraubwerkzeugs eingesetzt wird;
- Fig. 9b: einen Längsschnitt entlang A-A durch die Schnellwechselhalterung gemäss Figur 9a;
- Fig. 9c: einen Schnitt entlang B-B durch die Schnellwechselhalterung gemäss Figur 9a;
- Fig. 9d: einen Schnitt entlang C-C durch die Schnellwechselhalterung gemäss Figur 9c, wobei nur das vordere Ende des Schnellwechselhalters dargestellt ist;
- Fig. 10: eine Explosionszeichnung des Schnellwechselhalterung gemäss Figur 9a;
- Fig. 11a: eine Ansicht von schräg hinten auf ein bekanntes Bit gemäss DIN 3126 C;
- Fig. 11b: eine Ansicht von schräg hinten auf ein weiteres bekanntes Bit gemäss DIN 3126 E;
- Fig. 11c: eine Ansicht von schräg hinten auf ein weiteres bekanntes Bit;
- Fig. 11d: eine Ansicht von schräg hinten auf ein weiteres bekanntes Bit, und

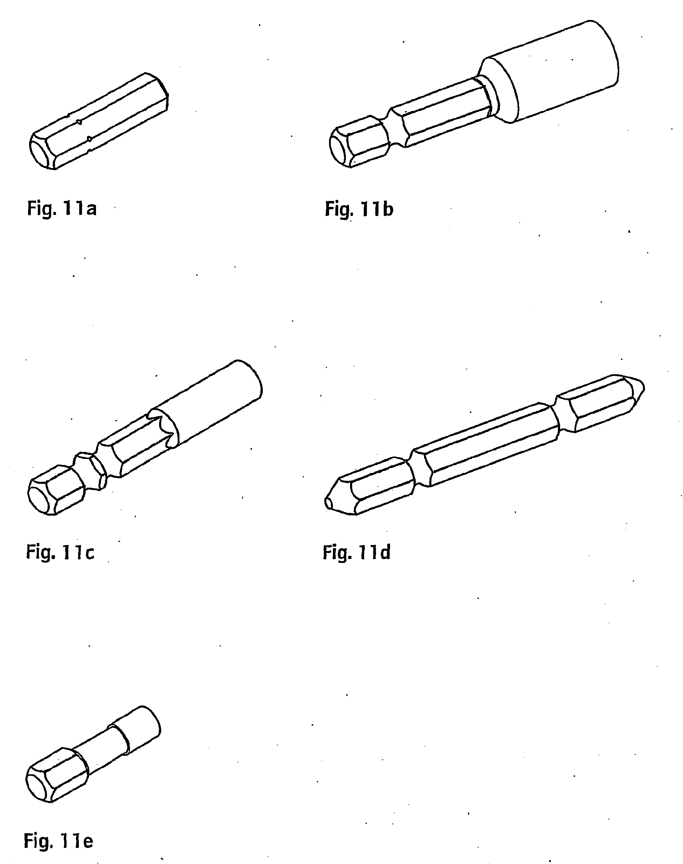

- Fig. 11 e: eine Ansicht von schräg hinten auf ein weiteres bekanntes Bit.

### DETAILLIERTE BESCHREIBUNG BEVORZUGTER AUSFÜHRUNGSFORMEN

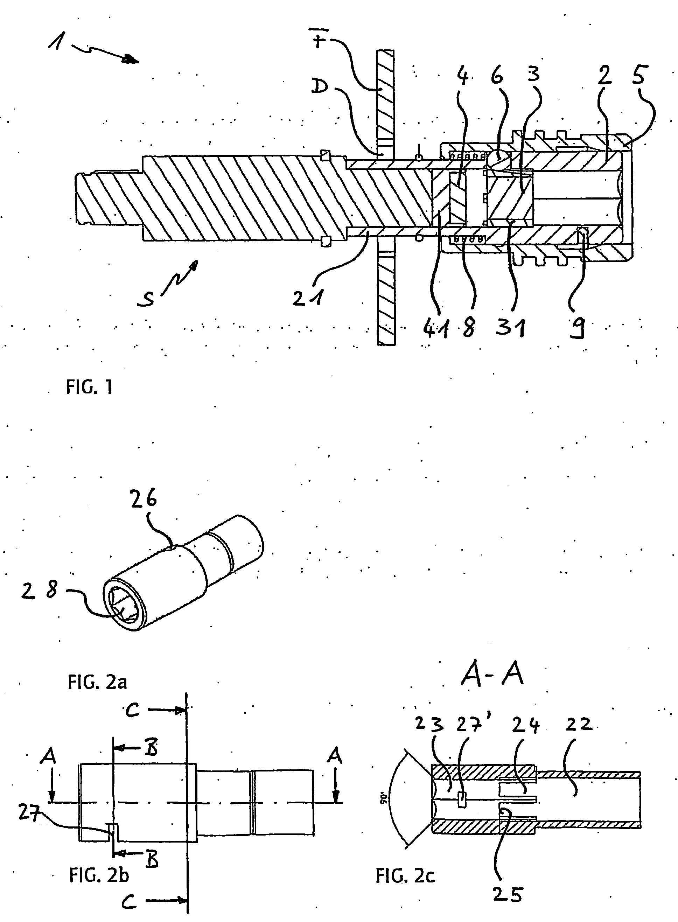

In der Figur 1 ist ein Längsschnitt durch einen Schnellwechselhalter 1 für Bits dargestellt, die auf einem Schaft S eines nicht weiter dargestellten elektrisch betriebenen Schraubendrehers oder einer Bohrmaschine fest montiert ist Vom Maschinengehäuse ist nur eine frontseitige Abdeckung F dargestellt, die einen Durchbruch D zur Aufnahme eines auf dem Schaft S befestigten antriebsseitigen Endes 21 der Bitaufnahme 2 aufweist. In der Figur 1 befindet sich kein Bit in der Schnellwechselhalterung 1 und die Halterung ist bereit für die Aufnahme eines solchen. Es ist für den Fachmann offensichtlich, dass die efindungsgemässe Schnellwechselhalterung statt auf dem Schaft S einer Maschine auch auf einem Sechskant oder einem Flachkant zur lösbaren Halterung in einem passenden Spannfutter einer Bohrmaschine oder einem Schraubendreher verdrehsicher befestigt sein kann. Falls nicht ausdrücklich beschrieben, sollen im Weiteren unter Schnellwechselhaltern 1 sowohl solche für eine fixe Maschinenmontage, als auch solche in der Ausführung als Wechselhalter verstanden werden. Es ist für den Fachmann klar, dass und wie sich die neue Lehre gemäss der vorliegenden Erfindung ohne Einschränkungen auf beide Typen anwenden lässt.

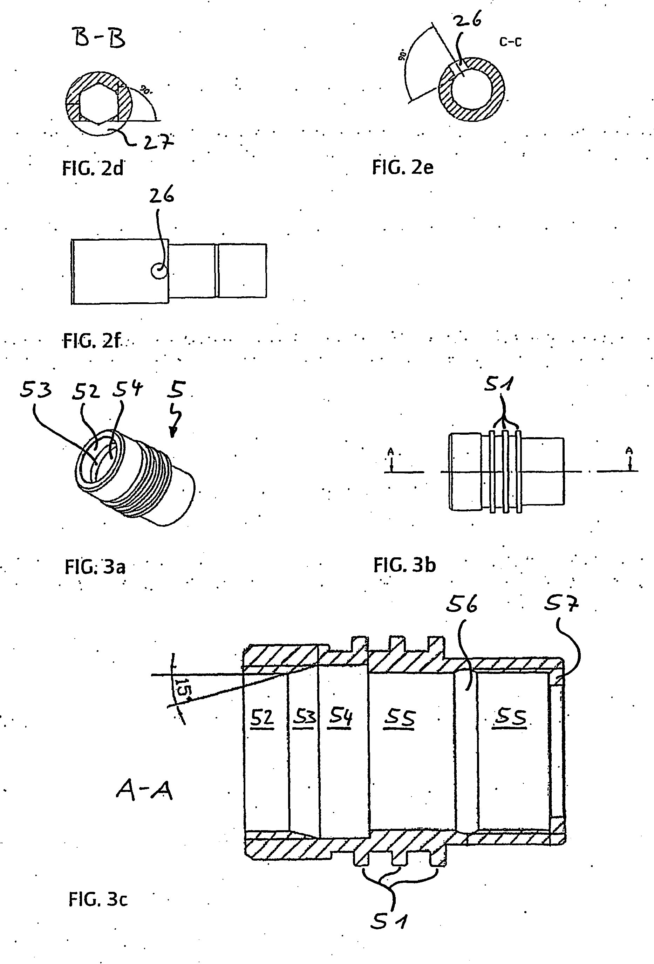

Die Bitaufnahme 2 ist in den Figuren 2a bis 2f im Detail dargestellt. Sie besteht im Wesentlichen aus einem Hohlzylinder, der an einem hinteren antriebseitigen Ende eine zylindrische Bohrung 22 zum Aufstecken und Befestigen auf einen angetriebenen Schaft S einer Bohrmaschine aufweist. Der vordere Bereich der Bitaufnahme ist mit einem innensechskant 23 zur drehmomentschlüssigen Aufnahme der Bits versehen. Innensechskant 23 und zylindrische Bohrung 22 überlappen in einem mittleren Bereich 24 der Bitaufnahme 2. Der Durchmesser der Bohrung 22 ist so auf das Mass des Innensechskants abgestimmt, dass am vorderen stirnseitigen Ende des Überlappungsbereiches sechs nach hinten gerichtete Anschlagflächen 25 ausgebildet sind. Im Überlappungsbereich durchsetzt eine radiale Bohrung 26 zur Aufnahme des Arretierelements 6, das vorzugsweise als Kugel ausgebildet ist, die Wand der Bitaufnahme 2. Im vorderen Bereich des Innensechskants ist eine Tangentialnut 27 so tief in die Wand geschnitten, dass ein Fenster 27' zur Aufnahme eines Rastelements 9 im Innensechskant 23 durchbrochen ist.

In der Figur 1 ist gezeigt, dass ein erster Permanentmagnet 3, auch Auswurfmagnet genannt, im Übergangsbereich axial verschiebbar gelagert ist. Der erste Magnet 3 ist in einen zylindrischen Sitz 31 gepresst, umspritzt oder eingegossen, der an einer Aussenseite mit einer Arretiernut 32 versehen ist. Der Sitz ist vorzugsweise aus rostfreiem Stahl oder Kunststoff gefertigt, so dass die Arbeitsschritte zum Anbringen der Nut 32 einfach durchgeführt werden können, die Lebensdauer hoch ist und die magnetische Wirkung nicht wesentlich abgeschwächt wird. Die Arretiernut 32 erstreckt sich vorteilhafterweise in etwa parallel zur Längsachse des Magneten 3 und ist im dargestellten Ausführungsbeispiel auf ein kugelförmiges Arretierelement 6 angepasst. Das heisst, die Nut 32 weist einen gleich bleibenden Radius R auf, der im Wesentlichen dem Radius der Arretierkugel 6 entspricht, wobei die Tiefe der Nut 32 vom vorderen Ende 34 bis zum hintern Ende 35 stetig abnimmt. Die Steigung α im Scheitel der Nut beträgt gemäss einer bevorzugten Ausführungsform 7°.

Die Funktion der Arretiernut 32 verdeutlicht der Querschnitt der Figur 1. Ein kugelförmiges Arretierelement 6 ist in die radiale Bohrung 26 in der Wand der Bitaufnahme 2 eingesetzte Eine Auswerferhülse 5 ist koaxial auf der Bitaufnahme 2 aufgesteckt, und begrenzt axial verschiebbar. Die im Wesentlichen kreiszylindrische Auswerferhülse 5 ist in der Figur 3 genauer gezeigt. An der Aussenseite ist sie in einem mittleren Bereich mit drei umlaufenden Stegen 51 versehen, die das Greifen und axiale Verschieben der Hülse 5 erleichtern. Die Stege 51 können auch durch einen gerändelten Bereich oder einen griffigen Elastomereinsatz ersetzt sein. Für die Funktion wichtiger ist die Gestaltung der Innenwand der Hülse 5. Im vordersten Bereich 52 ist der Innendurchmesser so auf den Aussendurchmesser der Bitaufnahme 2 angepasst, dass die Hülse 52 mit wenig Spiel auf der Aufnahme 2 aufsitzt. Nach hinten erweitert sich der Innendurchmesser der Hülse 52 über einen konischen Abschnitt 53 hin zu einem umlaufenden Aufnahmeraum 54 für ein Rast- oder Klemmelement 9, dessen Funktion im Folgenden noch genauer beschrieben ist. Das hintere Ende des Aufnahmeraumes 54 ist durch eine Stufe gebildet, an der sich der Innendurchmesser wieder verringert, so dass die Hülse 52 wiederum mit wenig Spiel auf der Aufnahme 2 aufsitzt. Dieser hintere Bereich 55 erstreckt sich bis an das antriebsseitige Ende der Hülse und ist nur noch durch einen umlaufenden Einstich 56 unterbrochen, der annähernd denselben Radius aufweist wie die Arretierkugel 6. Den hinteren Abschluss der Hülse bildet eine nach innen gerichtete Rippe 57, die im zusammengebauten Zustand, wie er in der Figur 1 gezeigt ist, einer Feder 8 als Widerlager dient.

Die Feder 8 drückt die Auswerferhülse 5 nach hinten, bis die Arretierkugel 6 mit ihrem radial nach aussen gerichteten Anteil in den Einstich 56 einrasten kann. Auf der nach innen gerichteten Seite greift die Kugel in die Arretiernut 32 ein. Der vordere Magnet 3 weist mit einem gleichsinnigen Pol zum hinteren Magnet 4, so dass sich die beiden Permanentmagnete abstossen. Da der hintere Magnet 4 in einer Aufnahme 41 axial unbeweglich direkt am Schaft S anliegt, wird der vordere Magnet 3 in Richtung der Aufnahmeöffnung 28 gedrückt. Die Arretierkugel 6 wird durch die Vorwärtsbewegung des Magneten 3 und die abnehmende Tiefe der Arretiernut 52 nach aussen in den Einstich 56 der Hülse 5 gedrückt, Der Durchmesser der Arretierkugel 6 ist so auf die Durchmesser des zylindrischen Sitzes 31 des Auswurfmagnets 3, die Wandstärke der Aufnahme 2 im Übergangsbereich und den inneren Durchmesser der Hülse im Einstichbereich angepasst, dass in der aufnahmebereiten Zustellung, wie sie in der Figur 1 gezeigt ist, der Auswurfmagnet 3 und die Hülse 5 in einer vorderen Stellung gehalten sind. In dieser Stellung liegt die vordere Stirnseite des Magneten 3 respektive des Magnetsitzes 31 an den Anschlagflächen 25 an. Gleichzeitig befindet sich der Aufnahmeraum 54 der Hülse 5 über der Tangentialnut 27, so dass das Rastelement 9 das Fenster 27' im Wesentlichen freigibt.

Im Folgenden soll nun die Funktionsweise der erfindungsgemässen Einhandbedienung genauer erläutert werden. Wenn ein Bit von vorne her in die Aufnahmeöffnung 28 der Bitaufnahme 2 eingeführt wird, dann ist das Rastelement 9 nicht im Weg und der Bit kann ohne Widerstand bis zur vorderen Stirnfläche des Auswurfmagneten 3 in den Innensechskant der Aufnahme 2 geschoben werden bis er am vorderen Magnet 3 angelangt ist. Beim weiteren Einschieben wird der vordere magnet 3 aus der Aufnahmeposition gegen die Magnetkraft des abstossenden hinteren Magneten 4 nach hinten geschoben. Gleichzeitig wird die vorzugsweise aus gehärtetem Stahl gefertigte Arretierkugel 6 vom Magneten 5 radial nach innen in die - sich zum Vorderbereich 54 hin mit einem Neigungswinkel α vertiefende - Arretiernut 52 gezogen. Sobald die Arretierkugel 6 den Einstich 56 freigibt drückt die Feder 8 die Hülse 5 nach hinten und die Kugel 6 ist in der radial inneren Stellung arretiert. Der Magnet 3 ist dadurch in einer hinteren Position gehalten und lässt sich trotz der Abstossung durch den zweiten Magneten 4 nicht mehr nach vorne verschieben. In dieser hinteren Haltestellung der Hülse 5 drückt der Innenkonus 53 gleichzeitig das Rastelement 9 nach innen, so dass ein Teil des Rastelementes durch das Fenster 27' in den Innensechskant ragt und dort in den jeweiligen Einstich des Aussensechskants des eingeschobenen Bit eingreift. Es ist ein wesentliches Merkmal der vorliegenden Erfindung, dass der Bit im eingeschobenen Zustand nicht mit der beim Auswerfen wirksamen Kraft beaufschlagt ist Die axial wirkende abstossende Magnetkraft wird bei eingestecktem Bit vom Arretierelement 6 aufgenommen, so dass die Rasteleniente 9 mit viel Spiel in den Einstich des Aussensechskants der Bits eingreifen können und nicht belastet sind. Da die Bits üblicherweise aus metallischen Materialien und Legierungen bestehen, die zusätzlich noch durch die Anziehungskraft des Magneten 3 in der Aufnahme 2 gehalten werden, kann in vorteilhaften Ausführungsformen auch ganz auf Rastelemente 9 verzichtet werden. Ein Herausfallen der eingesetzten Bits aus der Bitaufnahme 2 wird dabei allein durch die Anziehungskraft des ersten Magneten 3 verhindert.

Zum Auswechseln des Bits genügt es die Auswerferhülse 5 gegen die Kraft der Feder 8 nach vorne zu schieben bis die Arretierkugel 6 in den Einstich 56 ausweichen kann. Die abstossende Kraft zwischen den Magneten 3, 4 schiebt dabei einerseits den beweglich gelagerten Magneten 3 und damit den anliegenden Bit in Richtung der Aufnahmeöffnung 28 und gleichzeitig die Arretierkugel 6 durch den Anstieg α der Arretiernut 32 radial nach aussen in den Einstich 56. Beim Verschieben der Hülse 5 nach vorne gibt der Innenkonus 53 das Rastelement 9 frei, so dass der Bit beim Erreichen der vorderen Abgabestellung nur noch gegen die Anziehungskraft des Magneten 3 aus der Bitaufnahme 2 herausgezogen werden kann. Dies lässt sich alles vom Nutzer problemlos mit nur einer Hand erledigen, so dass beim Schnellwechselhalter 1 gemäss der vorliegenden Erfindung berechtigterweise von einer Einhandfunktion oder Einhandbedienungsfunktion gesprochen werden kann.

Da die zum Auswerfen benötigte Kraft der beteiligten Elemente der erfindungsgemässen Schnellwechselhalterung 1 nicht direkt auf die eingesetzten Bits wirkt, spielt die Anpassung der axialen Position des Rastmittel 9 auf die genormten Einstiche im Bit keine wesentliche Rolle und der erfindungsgemässe Bithalter lässt sich in vorteilhafter Weise mit verschiedensten Bittypen verschiedener Normen einsetzen.

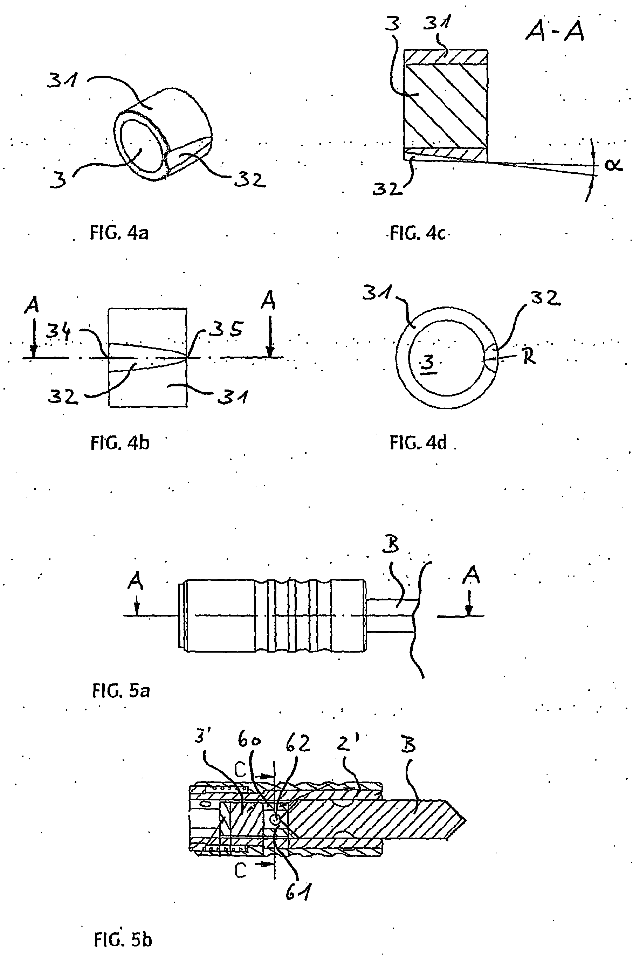

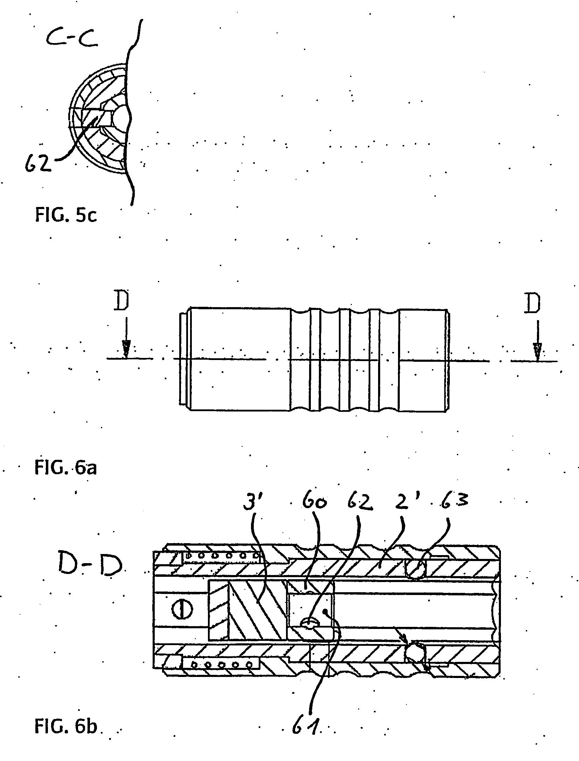

In einer weiteren Ausführungsform der vorliegenden Erfindung, wie sie in der Figur 5 dargestellt ist, ist zwischen dem vorderen Magneten 3' und dem eingesteckten Bit B im Inneren der Bitaufnahme 2' ein Abstandsring 60 angebracht Der Abstandsring 60 mit seinem freien Zentralbereich 61 erlaubt es, so genannte Doppelbits einzusetzen, da jeweils die nicht benötigte Arbeitsspitze teilweise in den freien Innenraum 61 ragen kann. Der Abstandsring 60 lässt sich zusätzlich noch mit einer Hubbegrenzung 62 ausstatten die einen radial nach aussen ragenden Stift umfasst, der in ein korrespondierendes Langloch in der Innenwand der Aufnahme 2' eingreift. Dies erlaubt es, die von den Magnetkräften getriebene axial nach vorne gerichtete Auswurfbewegung auf wenige Millimeter zu begrenzen. In der Figur 6 ist dargestellt, dass ein solcher Abstandsring 60 auch bei Bithaltern mit magnetisch unterstütztem Auswerfen und herkömmlichen Arretieruhgsmitteln 63 zum Eingriff in die jeweiligen Einstiche der Bits zum Einsatz kommen kann.

In der Figur 7 ist eine weitere Ausführungsform eines Bithalters gemäss der vorliegenden Erfindung gezeigt, der ebenfalls speziell zur Aufnahme von Doppelbits B' geeignet ist. Beim Bithalter 80 gemäss dieser Ausführungsform ist die Funktion des Abstandsrings in den Magnetsitz integriert. Figur 7a zeigt, dass an der vorderen Seite des Magnetsitzes 81 ein Abstandsring 82 angeformt ist, der wiederum an seiner Vorderseite eine zentrale konische Aufnahmeöffnung 83 aufweist. Dieser freie Zentralbereich 83 erlaubt es, so genannte Doppelbits B' einzusetzen, da die jeweils nicht benötigte Arbeitsspitze teilweise in den freien Innenraum 83 ragen kann, wie dies in der Figur 7b gezeigt ist. Der Konus ist dabei so geformt, dass die Spitze des Bits vom Auswurfmagneten 3' beabstandet gehalten ist um eine Beschädigung des Magneten 3' durch den Bit zu verhindern. Die Arretiernut 32' ist in einem hinteren Bereich analog zur vorgängig beschriebenen Arretiernut 32 gestaltet. Dass sie im Bereich des Abstandsringes 82 wieder ansteigt ist primär fertigungstechnisch bedingt, für die Funktion aber nicht wesentlich, da die Arretierkugel 6' mit diesem Bereich der Nut 32' nicht zusammenwirkt Im Übrigen sind Ausgestaltung und Funktion der für die Arretierung wesentlichen Teile der Vorrichtung analog zu der oben beschriebenen Schnellwechselhalterung 1.

Der in der Figur 7 dargestellte Schnellwechselhalter 80 ist zudem mit zwei Rastelementen 9', 9" zum Sichern von eingesteckten Bits ausgerüstet. Der Querschnitt durch die Bitaufnahme 2' der Figur 7c verdeutlicht, dass die Wand der Bitaufnahme 2' von zwei radialen Bohrungen 29', 29" durchbrochen ist. Der Querschnitt der Figur 7c soll verdeutlichen, dass die beiden radialen Bohrungen und damit die beiden Rastkugeln 9', 9" um 60° versetzt zueinander an zwei benachbarten Seitenflächen des Innensechskants der Aufnahme 2' angeordnet sind. Die Figuren 7a und 7b verdeutlichen, dass die zwei radialen Bohrungen 29', 29" zur radial verschiebbeweglichen Aufnahme der Rastkugeln 9', 9" zudem axial voneinander beabstandet angeordnet sind. Eine derartige Platzierung der Rastelemente 9', 9" stellt sicher, dass alle gängigen Bittypen in eingeschobener Stellung gegen ein Herausfallen gesichert werden können. In einer hinteren Haltestellung der Hülse 5' drücken die beiden Innenkoni 53' und 53" die Rastelemente 9' und 9" nach innen, so dass jeweils mindestens ein radial nach innen gerichteter Teil des jeweiligen Rastelements 9' oder 9" in den Innensechskant ragt und dort in den jeweiligen Einstich des Aussensechskants des eingeschobenen Bit eingreifen kann. Der axiale Abstand von 5 mm zwischen den beiden Rastelementen 9' und 9" und der Abstand f von 12,6 mm zwischen Arretierelement 6' und hinterem Rastelement 9' und der Abstand e von 17,6 mm zwischen Arretierelement 6' und vorderem Rastelement 9" stellen sicher, dass sowohl die beiden oben beschriebenen Bittypen nach DIN Norm als auch die Japanbits wie in Figur 8 dargestellt (mit einem Einstichradius Rj von 3.3458 mm) und einer Länge i vom hinteren Ende bis zum Scheitelpunkt des Einstiches j von 14.2 mm) gesichert werden können. Vorzugsweise beträgt der Abstand d zwischen dem Arretiermittel 6' und dem Vorderende der Aufnahme 2' 21 mm, so dass sichergestellt ist, dass die Einstiche der Bits aller Typen im eingeschobenen Zustand vollständig in der Aufnahme 2' zu liegen kommen, so dass der Aussensechskant des jeweils eingeschobenen Bits im vordersten Bereich der Aufnahme 2' mit dem Innensechskant der Aufnahme 2' eine optimale Führung und drehmomentschlüssige Halterung sicherstellt. In diesen bevorzugten Ausführungsformen beträgt die Höhe h des Magnetsitzes 81 einschliesslich integriertem Abstandsring 82 8 mm und der axiale Weg g, den der Magnet in der Aufnahme 2' zurücklegen kann, ist auf 2 mm begrenzt. Als wesentliches Merkmal der vorliegenden Erfindung, sind auch hier wieder die Bits im eingeschobenen Zustand nicht mit der beim Auswerfen wirksamen Kraft beaufschlagt. Die axial wirkende abstossende Magnetkraft wird bei eingestecktem Bit trotz zweier Rastelemente 9' und 9" wiederum primär vom Arretierelement 6' aufgenommen.

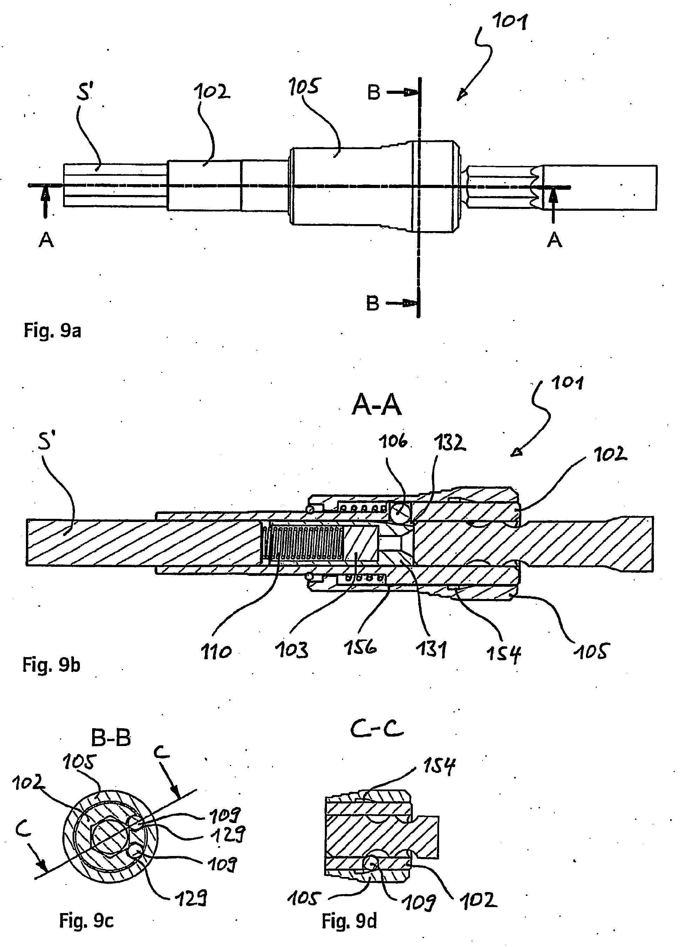

Die in den Figuren 9a bis 9d dargestellte Schnellwechselhalterung 101 ist eine weitere erfindungsgemässe Ausführungsform. Die Bitaufahme 102 besteht dabei im Wesentlichen aus einem Hohlzylinder, welcher an seinem hinteren Ende durch einen in den Hohlzylinder gesteckten und fxierten Schaft S', beispielsweise einer Bohrmaschine abgeschlossen wird. Im dargestellten Beispiel wird dieser Schaft S' durch einen Sechskantstift dargestellt. Vorzugsweise ist dieser Sechskantstift in etwa identisch zu der Dimension des Sechskants der normierten Schraubbits, so dass der Hohlzylinder in seinem Innern vorzugsweise eine gleichbleibenden sechskantige Kontur über seine gesamte Länge aufweist und die Bits drehmomentschlüssig aufgenommen werden können. Im Innern der Bitaufnahme 102 ist ein Magnetsitz 131 mit einer an seiner vorderen Aussenseite angebrachten Arretiernut 132 mit einer Steigung α' beweglich gelagert. Vorzugsweise verfügt auch dieser Magnetsitz 131 über eine Aussenkontur in Form eines Sechskants. Der Magnetsitz 131 verfügt auf seiner Vorderseite über eine konische Bohrung, welche in Funktion und Dimensionierung im Wesentlichen dem Abstandsring 60, 82 entspricht, so dass sogenannte Doppelbits problemlos aufgenommen werden können. Im Innern des Magnetsitzes 131 ist vorzugsweise wiederum ein Magnet 103 angebracht, welches ein Bit bei seinem Auswurf festhält. Dieser Magnet 103 entspricht in seiner Funktion und Dimensionierung im Wesentlichen dem Magneten 3.. Die Auswurfkraft wird jedoch nicht über einen zweiten Magneten erzeugt, sondern konventionell über ein Auswurffeder 110, welche den Magnetsitz nach vorne stösst. Ein Arretierelement 106, vorzugsweise in Form einer Kugel, verhindert in Zusammenwirkung mit der Arretiernut 132, dass die für den Auswurf benötigte Kraft permanent auf das Bit und somit auf das Rastelement 109 wirkt, welches in einer radialen Bohrung 129 verschiebbar gelagert ist. In einer bevorzugten Ausführungsform sind zwei Rastelemente 109 um 60° versetzt in der Bitaufnahme 102 so angeordnet, dass sie auf die Kanten des Sechskants, bzw. auf die darin eingebrachten Einstiche wirken. Alternativ können die Rastelemente aber auch wie in Figur 7c dargestellt auf die Seitenflächen des Sechskants wirken. Zum Auslösen des Bits aus der Bitaufnahme 102 wird die Auswerferhülse 105 entgegen der Federkraft der Feder 108 nach vorne gedrückt, so dass das Arretierelement 106 in den Einstich 156 der Auswerferhülse 105 ausweichen kann. Gleichzeitig ermöglicht dieses Schieben der Auswerferhülse 105 nach vorne, dass sich die Rastelemente 109 in den Aufnahmeraum 154 der Auswurfhülse 105 bewegen können und somit das Bit zur Entnahme freigegeben und nur noch durch das Magnet 103 festgehalten wird.

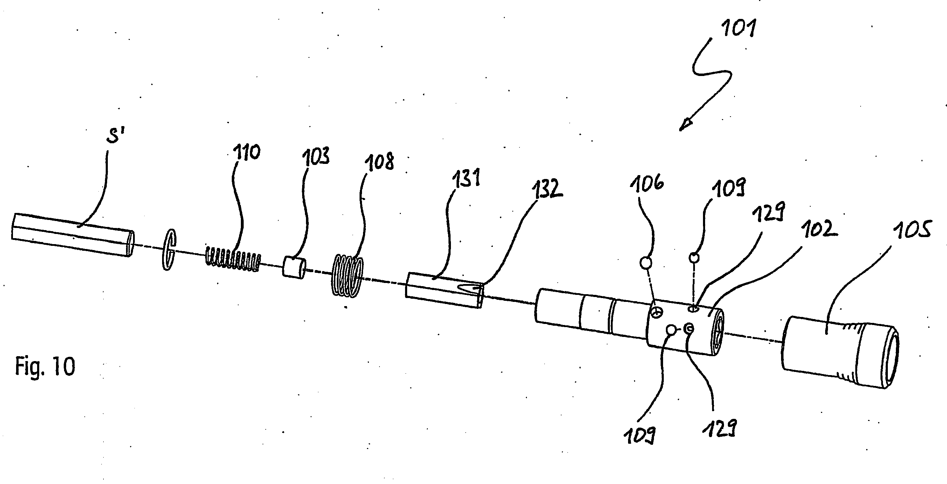

Figur 10 zeigt in einer Explosionszeichnung die einzelnen Teile der Schnellwechselhatterung 101 gemäss Figur 9a. Deutlich zu erkennen ist zusammen mit der Figur 9b die Tatsache, dass alle Einzelteile mit Ausnahme der Arretier- und Rastelemente 106, 109 aus einer Richtung, nämlich von hinten, montierbar sind, was die Herstellung vereinfacht und auch auf der Kostenseite wesentliche Einsparungen ermöglicht

Die Figuren 11a bis 11e zeigen verschiedene Varianten von bekannten und handelsüblichen Bits, welche von der erfindungsgemässen Schnellwechselhalterung aufgenommen werden könnten. In Figur 11 a ist beispielsweise ein Bit gemäss DIN 3126 C, in Figur 11b ein Bit gemäss DIN 3126 E dargestellt Es versteht sich von selbst, dass die Lehre der Erfindung sich nicht auf diese gezeigten Varianten beschränkt.

## Patentansprüche

1. Schnellwechselhalter (1, 80, 101) für Schraubendrehereinsätze oder Bits B umfassend eine Bitaufnahme (2, 2', 102) mit einem vorderen Innensechskantbereich (23) zur drehmomentschlüssigen Aufnahme von Bits B, wobei im Inneren der Bitaufnahme (2, 2', 102) Auswurfmittel (3, 3', 4, 31, 81, 103, 110, 131) vorgesehen sind, die durch den eingesetzten Bit in axialer Richtung vorgespannt werden, wobei eine Arretierung in einer Halteposition durch das Zusammenwirken von Arretiermittel (6, 6', 106) mit den Auswurfmitteln (3, 3', 4, 31, 81, 103, 110, 131) derart bewerkstelligt ist, dass der eingesetzte Bit im Wesentlichen frei von Vorspannkräften ist und dass die Auswurfmittel (3, 3', 4, 31, 81, 103, 110, 131) mindestens einen ersten und einen zweiten Permanentmagneten (3, 3', 4) umfassen, die derart angeordnet sind, dass sie sich abstossen, oder dass die Auswurfmittel einen federkraftbeaufschlagten Auswerfer (103) umfassen, **dadurch gekennzeichnet, dass** ein kugelförmiges Arretierelement (6, 6', 106) an einer Arretiernut (32, 32', 132) des ersten axial beweglichen Magnet (3, 3') oder des Auswerfers (103) angreift, wobei die Arretiernut (32, 32') einen gleich bleibenden Radius R aufweist, der im Wesentlichen dem Radius der Arretierkugel (6, 6', 106) entspricht und die Tiefe der Nut (32, 32', 132' vom vorderen Ende (54) bis zum hintern Ende (55) stetig abnimmt, so dass die Arretierkugel (6, 6', 106) in einer radial inneren Arretierposition den Magneten (3, 3') oder den Auswerfer (103) in einer hinteren Halteposition arretiert und in einer radial äusseren Freigabeposition dem Magneten (3, 3') oder dem Auswerfer (103) die Bewegung in eine vordere Abgabeposition ermöglicht.

2. Schnellwechselhalter (1, 80) nach Anspruch 1, **dadurch gekennzeichnet, dass** der Auswurfmagnet (3) in einem zylindrischen Sitz (31) angeordnet ist, so dass die Arretiernut (32) auf einer äusseren Mantelfläche des Sitzes (31) angeordnet ist.

3. Schnellwechselhalter (1, 80, 101) nach Anspruch 1 oder 2, **dadurch gekennzeichnet, dass** der Durchmesser der Arretierkugel (6, 6', 106) derart auf die Durchmesser des Auswurfmagneten (3, 3') oder des zylindrischen Sitzes (31, 81, 131) des Auswurfmagneten (3, 3') oder des Auswerfers (103), die Wandstärke der Aufnahme (2, 2', 102) in einem Übergangsbereich (24) und den inneren Durchmesser einer Auswurfhülse (5, 5', 105) in einem Einstichbereich (56, 156) angepasst ist, dass in einer aufnahmebereiten Stellung der Auswurfmagnet (3, 3') oder der Auswerfer (103) sowie die Hülse (5, 5', 105) in einer vorderen Stellung gehalten sind.

4. Schnellwechselhalter (1) nach einem der Ansprüche 1 bis 3, **dadurch gekennzeichnet, dass** Innensechskant (23) und eine zylindrische Bohrung (24) in einem mittleren Bereich überlappen, wobei die Durchmesser der Bohrung (22) und das Mass des Innensechskants derart aufeinander abgestimmt sind, dass am vorderen stirnseitigen Ende des Überlappungsbereiches sechs nach hinten gerichtete Anschlagflächen (25) ausgebildet sind, an denen die vordere Stirnseite des Magneten (3, 3') und/oder des Magnetsitzes (31, 81) oder eines Abstandsringes (82) zum anliegen kommen kann.

5. Schnellwechselhalter (1, 80, 101) nach einem der Ansprüche 1 bis 4, **dadurch gekennzeichnet, dass** im vorderen Bereich des Innensechskants eine Tangentialnut (27) ein Fenster (27') zur Aufnahme eines Rastelements (9, 9', 9", 109) im Innensechskant (23) ausbildet oder dass in mindestens einem Eckbereich im vorderen Bereich des Innensechskants mindestens eine Radialbohrung (29', 29", 129) ein Fenster zur Aufnahme eines Rastelements (9, 9', 9", 109) im Innensechskant ausbildet.

6. Schnellwechselhalter (1, 80, 101) nach Anspruch 5, **dadurch gekennzeichnet, dass** die Hülse (5, 5', 105) einen Innenkonus (53) im Bereich der Tangentialnut (27) oder der mindestens einen Radialbohrung (29', 29", 129) aufweist, so dass der Innenkonus (53) bei der axialen Verschiebung der Hülse (5, 5', 105) nach hinten zur Antriebsseite ein in der Tangentialnut (27) oder der Radialbohrung (29', 29", 129) radial verschiebbeweglich gelagertes Rastelement (9, 9', 109) durch das Fenster (27') in den Bereich des Innensechskants drückt, wo es in einen Einstich des Aussensechskants eines zu haltenden Bits eingreift.

7. Schnellwechselhalter (1) nach einem der Ansprüche 1 bis 4, **dadurch gekennzeichnet, dass** im vorderen Bereich des Innensechskants zwei radiale Bohrungen (29', 29", 129) zur radial verschiebbeweglichen Aufnahme von Rastelementen (9', 9", 109) axial voneinander beabstandet und um 60° radial zueinander versetzt angeordnet sind.

8. Schnellwechselhalter (1) nach einem der Ansprüche 1 bis 7, **dadurch gekennzeichnet, dass** zwischen dem vorderen Magneten (3') und dem eingesteckten Bit B im Inneren der Bitaufnahme (2') ein Abstandsring (60, 82) angeordnet ist.

9. Schnellwechselhalter (1) nach Anspruch 8, **dadurch gekennzeichnet, dass** der Abstandsring (60, 82) mit einer Hubbegrenzung versehen ist.

10. Schnellwechselhalter (1) nach Anspruch 8 oder 9, **dadurch gekennzeichnet, dass** der Abstandsring (82) einstückig mit dem zylindrischen Sitz (81) des Auswurfmagneten (3') angeordnet ist.

11. Schnellwechselhalter (1) nach einem der Ansprüche 8 bis 10, **dadurch gekennzeichnet, dass** der Abstandsring (60, 82) einen freien Zentralbereich zur Aufnahme der jeweils nicht benötigten Arbeitsspitze von so genannten Doppelbits B' aufweist.

## Claims

1. Quick-change holder (1, 80, 101) for screwdriver inserts or bits B, comprising a bit receptacle (2, 2', 102) having a front hexagon socket region (23) for the torque-locking reception of bits B, wherein ejecting means (3, 3', 4, 31, 81, 103, 110, 131) are provided in the interior of the bit receptacle (2, 2', 102) and are preloaded in the axial direction by the inserted bit, wherein locking is effected in a holding position by the interaction of locking means (6, 6', 106) with the ejecting means (3, 3', 4, 31, 81, 103, 110, 131) in such a way that the inserted bit is substantially free of preloading forces, and wherein the ejecting means (3, 3', 4, 31, 81, 103, 110, 131) comprise at least one first and one second permanent magnet (3, 3', 4) which are arranged in such a way that they repel one another, or wherein the ejecting means comprise a spring-force-loaded ejector (103), **characterized in that** a spherical locking element (6, 6', 106) acts on a locking groove (32, 32', 132) of the first axially movable magnet (3, 3') or of the ejector (103), wherein the locking groove (32, 32') has a uniform radius R which substantially corresponds to the radius of the locking ball (6, 6', 106), and the depth of the groove (32, 32', 132) decreases continuously from the front end (54) to the rear end (55), such that the locking ball (6, 6', 106), in a radially inner locking position, locks the magnet (3, 3') or the ejector (103) in a rear holding position and, in a radially outer release position, enables the magnet (3, 3') or the ejector (103) to move into a front delivery position.

2. Quick-change holder (1, 80) according to Claim 1, **characterized in that** the ejecting magnet (3) is arranged in a cylindrical seat (31), and therefore the locking groove (32) is arranged on an outer lateral surface of the seat (31).

3. Quick-change holder (1, 80, 101) according to Claim 1 or 2, **characterized in that** the diameter of the locking ball (6, 6', 106) is adapted to the diameters of the ejecting magnet (3, 3') or of the cylindrical seat (31, 81, 131) of the ejecting magnet (3, 3') or of the ejector (103), to the wall thickness of the receptacle (2, 2', 102) in a transition region (24) and to the inside diameter of an ejecting sleeve (5, 5', 105) in a recess region (56, 156) in such a way that, in a position ready for reception, the ejecting magnet (3, 3') or the ejector (103) and the sleeve (5, 5', 105) are held in a front position.

4. Quick-change holder (1) according to one of Claims 1 to 3, **characterized in that** hexagon socket (23) and a cylindrical bore (24) overlap in a central region, the diameter of the bore (22) and the size of the hexagon socket being matched to one another in such a way that six stop surfaces (25) directed rearwards are formed on the front-face end of the overlapping region, against which stop surfaces (25) the front end face of the magnet (3, 3') and/or of the magnet seat (31, 81) or of a spacer ring (82) can come to bear..

5. Quick-change holder (1, 80, 101) according to one of Claims 1 to 4, **characterized in that** a tangential groove (27), a window (27') for receiving a latching element (9, 9', 9", 109) in the hexagon socket (23), is formed in the front region of the hexagon socket, or **in that** at least one radial bore (29', 29", 129), a window for receiving a latching element (9, 9', 9", 109) in the hexagon socket, is formed in at least one corner region in the front region of the hexagon socket.

6. Quick-change holder (1, 80, 101) according to Claim 5, **characterized in that** the sleeve (5, 5', 105) has an internal taper (53) in the region of the tangential groove (27) or of the at least one radial bore (29', 29", 129), such that the internal taper (53), during the axial displacement of the sleeve (5, 5', 105) to the rear towards the drive side, presses a latching element (9, 9', 109), which is mounted in the tangential groove (27) or the radial bore (29', 29", 129) in a radially displaceable manner, through the window (27') into the region of the hexagon socket, where it engages in a recess of the outer hexagonal profile of a bit to be held.

7. Quick-change holder (1) according to one of Claims 1 to 4, **characterized in that** two radial bores (29', 29", 129) for the radially displaceable reception of latching elements (9', 9", 109) are arranged at an axial distance apart and radially offset from one another by 60° in the front region of the hexagon socket.

8. Quick-change holder (1) according to one of Claims 1 to 7, **characterized in that** a spacer ring (60, 82) is arranged between the front magnet (3') and the inserted bit B in the interior of the bit receptacle (2').

9. Quick-change holder (1) according to Claim 8, **characterized in that** the spacer ring (60, 82) is provided with a stroke limit.

10. Quick-change holder (1) according to Claim 8 or 9, **characterized in that** the spacer ring (82) is arranged in one piece with the cylindrical seat (81) of the ejecting magnet (3').

11. Quick-change holder (1) according to Claim 8 or 9, **characterized in that** the spacer ring (82) is arranged in one piece with the cylindrical seat (81) of the ejecting magnet (3').

## Revendications

1. Porte-outil à serrage rapide (1, 80, 101) pour inserts de tournevis ou embouts B, comprenant un logement d'embout (2, 2', 102) avec une région avant à six pans creux (23) intérieur pour recevoir par engagement dynamométrique des embouts B, des moyens d'éjection (3, 3', 4, 31, 81, 103, 110, 131) étant prévus à l'intérieur du logement d'embout (2, 2', 102), lesquels sont précontraints dans la direction axiale par l'embout inséré, un blocage dans une position de retenue étant réalisé par la coopération de moyens de blocage (6, 6', 106) avec les moyens d'éjection (3, 3', 4, 31, 81, 103, 110, 131) de telle sorte que l'embout inséré soit essentiellement exempt de forces de précontrainte et que les moyens d'éjection (3, 3', 4, 31, 81, 103, 110, 131) comprennent au moins un premier et un deuxième aimant permanent (3, 3', 4) qui sont disposés de telle sorte qu'ils se repoussent, ou que les moyens d'éjection comprennent un éjecteur (103) sollicité par une force de ressort, **caractérisé en ce qu'**un élément de blocage en forme de bille (6, 6', 106) vient en prise avec une rainure de blocage (32, 32', 132) du premier aimant mobile axialement (3, 3') ou de l'éjecteur (103), la rainure de blocage (32, 32') présentant un rayon constant R, qui correspond essentiellement au rayon de la bille de blocage (6, 6', 106) et la profondeur de la rainure (32, 32', 132) diminuant de manière constante depuis l'extrémité avant (54) jusqu'à l'extrémité arrière (55), de sorte que la bille de blocage (6, 6', 106) dans une position de blocage radialement interne bloque l'aimant (3, 3') ou l'éjecteur (103) dans une position de retenue arrière et, dans une position de libération radialement extérieure, permette à l'aimant (3, 3') ou à l'éjecteur (103) de se déplacer dans une position de déchargement avant.

2. Porte-outil à serrage rapide (1, 80) selon la revendication 1, **caractérisé en ce que** l'aimant d'éjection (3) est disposé dans un siège cylindrique (31), de sorte que la rainure de blocage (32) soit disposée sur une surface d'enveloppe extérieure du siège (31).

3. Porte-outil à serrage rapide (1, 80, 101) selon la revendication 1 ou 2, **caractérisé en ce que** le diamètre de la bille de blocage (6, 6', 106) est adapté aux diamètres de l'aimant d'éjection (3, 3') ou du siège cylindrique (31, 81, 131) de l'aimant d'éjection (3, 3') ou de l'éjecteur (103), à l'épaisseur de paroi du logement (2, 2', 102) dans une région de transition (24) et au diamètre intérieur d'une douille d'éjection (5, 5', 105) dans une région d'encoche (56, 156) de telle sorte que dans une position prête à la réception, l'aimant d'éjection (3, 3') ou l'éjecteur (103) ainsi que la douille (5, 5', 105) sont maintenus dans une position avant.

4. Porte-outil à serrage rapide (1) selon l'une quelconque des revendications 1 à 3, **caractérisé en ce que** le six pans creux (23) intérieur et un alésage cylindrique (22) se chevauchent dans une région centrale, les diamètres de l'alésage (22) et la dimension du six pans creux intérieur étant ajustés l'un à l'autre de telle sorte qu'à l'extrémité frontale avant de la région de chevauchement soient réalisées six faces de butée (25) orientées vers l'arrière, contre lesquelles le côté frontal avant de l'aimant (3, 3') et/ou du siège de l'aimant (31, 81) ou d'une bague d'espacement (82) peut venir en butée.

5. Porte-outil à serrage rapide (1, 80, 101) selon l'une quelconque des revendications 1 à 4, **caractérisé en ce que** dans la région avant du six pans creux intérieur, une rainure tangentielle (27) constitue une fenêtre (27') pour recevoir un élément d'encliquetage (9, 9', 9", 109) dans le six pans creux (23) intérieur, ou **en ce que** dans au moins une région de coin dans la région avant du six pans creux intérieur, au moins un alésage radial (29', 29", 129) constitue une fenêtre pour recevoir un élément d'encliquetage (9, 9', 9", 109) dans le six pans creux intérieur.

6. Porte-outil à serrage rapide (1, 80, 101) selon la revendication 5, **caractérisé en ce que** la douille (5, 5', 105) présente un cône interne (53) dans la région de la rainure tangentielle (27) ou de l'au moins un alésage radial (29', 29", 129), de sorte que le cône interne (53), lors du déplacement axial de la douille (5, 5', 105) vers l'arrière vers le côté d'entraînement, presse un élément d'encliquetage (9, 9', 109) monté de manière mobile en translation radiale dans la rainure tangentielle (27) ou l'alésage radial (29', 29", 129), à travers la fenêtre (27') dans la région du six pans creux intérieur, où il vient en prise dans une encoche du six pans creux extérieur d'un embout à retenir.

7. Porte-outil à serrage rapide (1) selon l'une quelconque des revendications 1 à 4, **caractérisé en ce que** dans la région avant du six pans creux intérieur, deux alésages radiaux (29', 29", 129) pour recevoir de manière mobile en translation radiale des éléments d'encliquetage (9', 9", 109) sont espacés axialement l'un de l'autre et sont disposés de manière décalée l'un de l'autre radialement de 60°.

8. Porte-outil à serrage rapide (1) selon l'une quelconque des revendications 1 à 4, **caractérisé en ce que** dans la région avant du six pans creux intérieur, deux alésages radiaux (29', 29", 129) pour recevoir de manière mobile en translation radiale des éléments d'encliquetage (9', 9", 109) sont espacés axialement l'un de l'autre et sont disposés de manière décalée l'un de l'autre radialement de 60°.

9. Porte-outil à serrage rapide (1) selon la revendication 8, **caractérisé en ce que** la bague d'espacement (60, 82) est pourvue d'une limitation de course.

10. Porte-outil à serrage rapide (1) selon la revendication 8 ou 9, **caractérisé en ce que** la bague d'espacement (82) est disposée d'une seule pièce avec le siège cylindrique (81) de l'aimant d'éjection (3').

11. Porte-outil à serrage rapide (1) selon l'une quelconque des revendications 8 à 10, **caractérisé en ce que** la bague d'espacement (60, 82) présente une région centrale libre pour recevoir les pointes de travail non requises respectives de ce qu'on appelle des doubles embouts B'.
